## Europäisches Patentamt
## European Patent Office
## Office européen des brevets

(19)

(11) Veröffentlichungsnummer : **0 190 380**
**B1**

(12)

# EUROPÄISCHE PATENTSCHRIFT

(45) Veröffentlichungstag der Patentschrift :
02.11.89

(51) Int. Cl.⁴ : **A 46 B 13/02**

(21) Anmeldenummer : **85101194.0**

(22) Anmeldetag : **05.02.85**

(54) Zahnbürste.

(43) Veröffentlichungstag der Anmeldung :
**13.08.86 Patentblatt 86/33**

(45) Bekanntmachung des Hinweises auf die Patenterteilung : **02.11.89 Patentblatt 89/44**

(84) Benannte Vertragsstaaten :
**AT CH DE FR GB LI**

(56) Entgegenhaltungen :
DE--A-- 1 532 804
FR--A-- 1 250 455
FR--A-- 1 525 112
US--A-- 1 945 616
US--A-- 3 105 254
US--A-- 3 577 579

(73) Patentinhaber : **Elektro-Wärme-Technik Siegfried Petz**
**Inh. Günter Petz Flachslander Strasse 8**
**D-8500 Nürnberg (DE)**

(72) Erfinder : **Petz, Günter**
**Flachslander Strasse 8**
**D-8500 Nürnberg (DE)**

(74) Vertreter : **Göbel, Matthias, Dipl.-Ing.**
**Pruppacher Hauptstrasse 5-7**
**D-8501 Pyrbaum-Pruppach (DE)**

**Beschreibung**

Die Erfindung betrifft eine Zahnbürste, deren Bürstenkopf mit einer durch einen Elektromotor antreibbaren Welle verbindbar ist und bei der die Welle durch einen Exzenterantrieb um die Längsachse verschwenkbar und zu dieser axial verschiebbar ist, wobei der Antrieb ein durch den Elektromotor angetriebenes Ritzel aufweist, das mit einem axial verlaufenden Kurbelstift versehen ist und der Kurbelstift in einen Schlitz einer an einem Mitnehmer fest gelagerten Kurbelgabel eingreift, wobei seinerseits der Mitnehmer an der Welle fest gelagert ist.

Bei einer Zahnbürste (US-A-3 577 579) dieser Art ist der in Verbindung mit einer Kurbelgabel die Schwenkbewegungen der den Brüstenkörper tragenden Welle bewirkende Kurbelstift in axialem Abstand mit zwei kegelstumpfförmigen Verbreiterungen versehen und die Kurbelgabel schräg am Mitnehmer angeordnet. Beim Drehen des Ritzels ermöglichen die Verbreiterungen durch Anlaufen an den sich übereinander erstreckenden Schrägflächen der Kurbelgabel Verschiebebewegungen von Kurbelgabel und Mitnehmer, wodurch sich die Schwenkbewegungen der Welle durch axiale Verschiebungen überlagern lassen. Die Wirkverbindung der Verbreiterungen mit den Schrägflächen neigt jedoch zu Verklemmungen und zeigt sich damit störanfällig. Bei einer noch bekannten Zahnbürste (FR-A-1 250 455) ist der Bürstenkopf auf einem verschieblichen Schwenkhebel aufgesetzt, der durch einen Kurbel- und einen Exzentertrieb den Bürstenkopf Hubbewegungen entlang einer Schleife verleiht. Diese Bewegungen werden jedoch vom Benutzer als unangenehm empfunden.

Es ist Aufgabe der Erfindung den Antrieb für den Bürstenkopf mit zwei sich überlagernden Bewegungen sicherer zu machen.

Erfindungsgemäß ist diese Aufgabe dadurch gelöst, daß das Ritzel an seinem Umfang mit einer Kulissennut versehen ist und der Mitnehmer mit einem Stift, der in die Kulissennut eingreift versehen ist. Die so erzielbaren Längsbewegungen sind sicher und leichtgängig erreichbar und ergeben gemeinsam mit den Schwenkbewegungen elliptische Bewegungskurven für den Bürstenkopf mit aus einer Mittelstellung in axialer und radialer Richtung jeweils gleich großen Halbachsen. Hierdurch erlaubt der Bürstenkopf Putzbewegungen, die zu einem extrem guten Säuberungs- und Massageeffekt führen und vom Benutzer als angenehm empfunden werden.

Fernerhin ist vorgesehen Maßnahmen zu schaffen, die eine Abdichtung des Handgriffs gegen flüssige Medien oder Zahnpasten dadurch herbeiführen, daß die Welle durch einen am Handgriff fixierten Dichtkörper umfaßt ist, der eine axial wirkende Dichtlippe und in axialem Abstand mindestens eine radial wirkende Dichtwulst aufweist. Bevorzugt sind zwei Dichtwulste axial hintereinander vorgesehen. Durch die Dichtlippe und die beiden Dichtwulsten ist der Antrieb sicher und dauerhaft gegen Verschmutzungen geschützt.

Die Erfindung ist in der Zeichnung an einem Ausführungsbeispiel erläutert. Hierin bedeuten :

Figur 1 einen Teilschnitt einer Zahnbürste,

Figur 2 einen Schnitt nach der Linie II-II der Figur 1,

Figur 3 einen Dichtkörper vergrößert, teilweise geschnitten und

Figur 4 die Arbeitskurve für den Bürstenkörper.

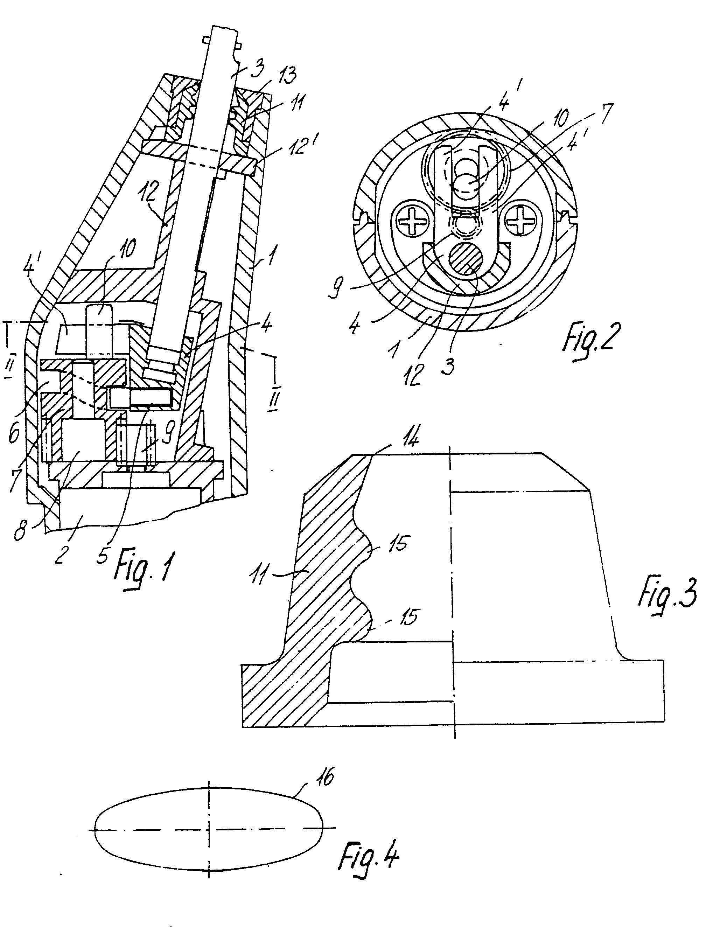

In den Figuren ist mit 1 der Handgriff bezeichnet, der in an sich bekannter Weise einen Antriebsmotor 2 für die Antriebswelle 3 eines nicht näher dargestellten Bürstenkörpers aufnimmt. Der Bürstenkörper ist auf die Antriebswelle 3 abnehmbar aufsteckbar. Die Antriebswelle 3 ist mit dem dem Antriebsmotor 2 zugewandten Ende in einen Mitnehmer 4 fest angeordnet, der mit einem Stift 5 in die Kulissennut 6 eines umlaufenden Kulissennutrades 7 eintaucht. Das Kulissennutrad 7 ist als auf einem Zapfen 8 frei drehbares Getrieberad ausgebildet und kämmt mit einem Motorritzel 9. Weiter trägt das Kulissennutrad 7 fest einen Stift 10, der sich zwischen zwei mit dem Mitnehmer 4 verbundene Streifenteile 4' erstreckt. An ihrem austrittsseitigen Ende ist die Antriebswelle 3 durch einen Dichtkörper 11 (Fig. 3) umfaßt, der im Handgriff 1 an einem Bund 12' der Konsole 12 abgestützt ist und mittels einer Kappe 13 axial fixiert ist. Der Dichtkörper weist eine Dichtlippe 14 sowie umlaufende Dichtwulste 15 auf. Die Dichtlippe 14 verhindert das Eindringen von flüssigen Medien bzw. von Zahnpaste in das Innere des Handgriffs 1, während die Dichtwulste 14, 15 gegebenenfalls eingedrungene Medien an axialem Wandern hindern.

Beim Anlegen des Antriebsmotors 2 an eine Stromquelle (nicht gezeigt) führt die Drehbewegung des Motorritzels 9 zu Umläufen des Kulissennutrades 7, wodurch der Stift 10 durch Zusammenwirken mit den Streifenteilen 4' des Mitnehmers 4 Schwenkbewegungen und durch Zusammenwirken von Kulissennut 6 und Stift 5 axiale Hubbewegungen auf die Antriebswelle 3 gelegt werden, wodurch der Bürstenkörper eine Putzbewegung ausführt, die einer Ellipse 16 entsprechen (Fig. 4). Von Vorteil hat sich erwiesen, wenn der mit der Kulissennut 6 zusammenwirkende Stift 5 drehbeweglich im Mitnehmer 4 untergebracht ist, wodurch ein Abrollen oder Kippen des Stiftes 5 an den Wandungen der Kulissennut 6 erzielbar ist, was günstige Reibungsmomente erwarten läßt.

**Patentansprüche**

1. Zahnbürste, deren Bürstenkopf mit einer durch einen Elektromotor antreibbaren Welle verbindbar ist und bei der die Welle durch einen Exzenterantrieb um die Längsachse verschwenkbar und zu dieser axial verschiebbar ist, wobei der Antrieb ein durch den Elektromotor angetriebenes Ritzel aufweist, das mit einem axial verlaufenden Kurbelstift versehen ist und der Kurbelstift in einen Schlitz einer an einem Mitnehmer fest gelagerten Kurbelgabel eingreift, wobei seinerseits der Mitnehmer an der Welle fest gelagert ist, dadurch gekennzeichnet, daß das Ritzel (7) an seinem Umfang mit einer Kulissennut (6) versehen ist und der Mitnehmer (4) mit einem Stift (5), der in die Kulissennut (6) eingreift, versehen ist.

2. Zahnbürste nach Anspruch 1, dadurch gekennzeichnet, daß die Welle (3) durch einen am Handgriff (1) fixierten Dichtkörper (11) umfaßt ist, der eine axial wirkende Dichtlippe (14) und in axialem Abstand mindestens eine radial wirkende Dichtwulst (15) aufweist (Fig. 3).

## Claims

1. Tooth brush, at which the brush head can be connected with a shaft driven by an electric motor, and at which the shaft is slewable around the longitudinal axis and axially movable in direction of the same by means of an eccentric drive. The drive shows a pinion driven by the electric motor, which is provided with an axial crank pin, and the crank pin gears in a slot of a crank fork which is fixed at a catch, and the catch itself is fixed at the shaft. The tooth brush is characterized in the way that the pinion (7) is provided with a crank slot (6) at its perimeter and that the catch (4) is provided with a pin (5) which gears in the crank slot (6).

2. Tooth brush according to claim 1, characterized in the way that the shaft (3) is embraced by a sealing device (11) fixed at the handle (1), which shows an axially acting sealing lip (14) and at least one radially acting sealing bulge (15) in the axial distance (Drawing 3).

## Revendications

1. Brosse à dents dont la tête de brosse peut être reliée à un arbre qui peut être entraîné par un moteur électrique, et dans laquelle l'arbre peut pivoter autour de l'axe longitudinal par un entraînement excentrique et est déplaçable axialement par rapport à celui-ci, l'entraînement présentant un pignon entraîné par le moteur électrique, qui est muni d'une bielle s'étendant axialement, et la bielle s'engageant dans une fente d'une fourche de manivelle solidaire d'un entraîneur, l'entraîneur étant, de son côté, solidaire de l'arbre, caractérisée en ce que le pignon (7) est muni à sa périphérie d'une gorge de coulisse (6) et l'entraîneur (4) est muni d'une broche (5) qui s'engage dans la gorge de coulisse (6).

2. Brosse à dents selon la revendication 1, caractérisée en ce que l'arbre (3) est entouré par un corps d'étanchéité (11) qui est fixé à la poignée (1), corps qui présente une lèvre d'étanchéité (14) agissant axialement et, à distance axiale, au moins un renflement (15) agissant radialement (figure 3).

Fig. 1

Fig.2

Fig.3

Fig.4